# EUROPÄISCHE PATENTSCHRIFT

(11) **EP 4 102 332 B1**
(45) Veröffentlichungstag und Bekanntmachung des Hinweises auf die Patenterteilung: **01.01.2025**
(21) Anmeldenummer: 22176486.3
(22) Anmeldetag: 31.05.2022
(51) Int. Cl.: G05D 1/00, G06V 10/82, G06V 20/17, B64U 70/00, B64U 101/30, B64U 101/60

(54) **VERFAHREN ZUM STEUERN EINER FLUGBEWEGUNG EINES FLUGGERÄTS ZUM LANDEN ODER ZUM ABWERFEN EINER LADUNG SOWIE FLUGGERÄT**
METHOD FOR CONTROLLING A FLIGHT MOVEMENT OF AN AIRCRAFT FOR LANDING OR DISCARDING A LOAD AND AN AIRCRAFT
PROCÉDÉ DE COMMANDE D'UN MOUVEMENT D'AÉRONEF D'UN AÉRONEF VERS L'ATTERRISSAGE OU LE LARGAGE D'UNE CHARGE ET AÉRONEF

(30) Priorität: 11.06.2021 DE 102021115140
(43) Veröffentlichungstag der Anmeldung: 14.12.2022
(73) Patentinhaber: Spleenlab GmbH, 07929 Saalburg-Ebersdorf (DE)
(72) Erfinder: Hagen, Chris, 07356 Bad Lobenstein (DE); Ölsner, Florian, 07743 Jena (DE); Milz, Dr. Stefan, 07929 Saalburg-Ebersdorf (DE)
(74) Vertreter: Bittner, Thomas L.

(56) Entgegenhaltungen:
- CN-A- 110 197 489
- DE-A1- 102018 125 629
- US-A1- 2020 258 400
- LEE MIN-FAN RICKY ET AL: "Landing Area Recognition using Deep Learning for Unammaned Aerial Vehicles", 2020 INTERNATIONAL CONFERENCE ON ADVANCED ROBOTICS AND INTELLIGENT SYSTEMS (ARIS), IEEE, 19 August 2020 (2020-08-19), pages 1 - 6, XP033831083, DOI: 10.1109/ARIS50834.2020.9205793
- SYMEONIDIS CHARALAMPOS CHARSYME@CSD AUTH GR ET AL: "Vision-based UAV Safe Landing exploiting Lightweight Deep Neural Networks", PROCEEDINGS OF THE 10TH INTERNATIONAL CONFERENCE ON INFORMATION SYSTEMS AND TECHNOLOGIES, ACMPUB27, NEW YORK, NY, USA, 1 January 2021 (2021-01-01), pages 13 - 19, XP058587816, ISBN: 978-1-4503-8856-6, DOI: 10.1145/3447587.3447590
- ANONYMOUS: "Künstliche Intelligenz - Wikipedia", 18 October 2022 (2022-10-18), XP055972710, Retrieved from the Internet <URL:https://de.wikipedia.org/wiki/Künstliche_Intelligenz> [retrieved on 20221019]

## Beschreibung

Die Erfindung betrifft ein Verfahren zum Steuern einer Flugbewegung eines Fluggeräts zum Landen des Fluggeräts, ein Verfahren zum Steuern einer Flugbewegung eines Fluggeräts zum Abwerfen einer Ladung durch das Fluggerät sowie ein Fluggerät.

### Hintergrund

Fluggeräte sind als bemannte sowie unbemannte Fluggeräte bekannt. Die Flugbewegung der Fluggeräte wird mit Hilfe einer Steuereinrichtung gesteuert, welche Steuersignale bereitstellt, um zum Beispiel Antriebseinrichtungen und Ruder zu steuern. Hierbei ist es bekannt, beim Bestimmen der Steuersignale für die Flugbewegung des Fluggeräts Sensorsignale einer Sensoreinrichtung zu berücksichtigen, die Umgebungsparameter für die Umgebung des Fluggeräts anzeigen, und die Flugbewegung in Abhängigkeit solcher Sensorsignale auszuführen.

CN 110 197 489 A offenbart Auswählen eines Landebereichs für ein unbemanntes Fluggerät. Aus zwei Mengen möglicher Flächen wird eine Schnittfläche bestimmt, wobei jede der Flächen der ersten Menge mit jeder der Flächen der zweiten Menge zum Schnitt gebracht wird. Die entstehenden Schnittflächen werden als dritte Menge betrachtet und zwei Scanverfahren unterzogen, wobei das erste Scanverfahren ein Lidar-Verfahren umfasst und das zweite Scanverfahren mittels eines fotoelektrischen Sensors durchgeführt wird. Zuletzt wird eine Fläche aus der dritten Menge ausgewählt, die ein bestimmtes Kriterium erfüllt.

LEE MIN-FAN RICKY ET AL: "Landing Area Recognition using Deep Learning for Unmanned Aerial Vehicles", 2020 INTERNATIONAL CONFERENCE ON ADVANCED ROBOTICS AND INTELLIGENT SYSTEMS (ARIC), IEEE, 19. August 2020, offenbart eine Erkennung von Landebereichen. Bilder eines Landebereichs werden aufgenommen und einem Test auf Hindernisse unterzogen. Die verwendeten Modalitäten betreffen die Helligkeiten aufgenommener Pixel und deren Klassifikation als Bildmerkmale.

SYMEONIDIS CHARALAMPOS CHARSYME@CSD AUTH GR ET AL: «Vision-based UAV Safe landing exploiting Lightweight Deep Neural Networks", PROCEEDINGS OF THE 10TH INTERNATIONAL CONFERENCE ON INFORMATION SYSTEMS AND TECHNOLOGIES; ACMPUB27, NEW YORK, NY, USA, 1. Januar 2021, offenbart Maßnahmen zum sicheren Landen von Fluggeräten in Bereichen, in denen sich Personen aufhalten. Detektoren werden verwendet, die einer entsprechend bemessenen rechteckigen Bounding Box ein diskretes Klassenlabel zuweisen, wobei mehrere Bounding Boxes jedes auf dem Bild erkannte Objekt einrahmen. Verschiedene Ansätze zur Erkennung solcher Hindernisse sind offenbart und betreffen insbesondere das Trainieren eines neuronalen Netzes und das Zuweisen von Klassenlabeln zu Pixeln.

DE 10 2018 125629 A1 offenbart Echtzeit-Detektion und -Korrektur von Sensoren in autonomen Maschinen. Ein oder mehrere Sensoren werden verwendet, um ein oder mehrere Bilder einer Szene zu erfassen. Die Sensoren umfassen Kameras. Ferner offenbart ist die Verwendung einer Klassifizierungs- und Vorhersagelogik, um einem Deep-Learning-Modell zu ermöglichen, einen mit einem Bild assoziierten Sensor in Echtzeit zu identifizieren.

### Zusammenfassung

Aufgabe der Erfindung ist es, ein Verfahren zum Steuern einer Flugbewegung eines Fluggeräts zum Landen oder zum Abwerfen einer Ladung in einem freien Lande- / Abwurfbereich sowie ein Fluggerät anzugeben, die eine effiziente und sichere Steuerung des Fluggeräts in Abhängigkeit von den Verhältnisses am Boden ermöglichen.

Zur Lösung sind ein Verfahren zum Steuern einer Flugbewegung eines Fluggeräts zum Landen des Fluggeräts und ein Verfahren zum Steuern einer Flugbewegung eines Fluggeräts zum Abwerfen einer Ladung durch das Fluggerät nach den unabhängigen Ansprüchen 1 und 2 geschaffen. Weiterhin sind ein jeweiliges Fluggerät nach den nebengeordneten Ansprüchen 8 und 9 geschaffen. Ausgestaltungen sind Gegenstand von abhängigen Unteransprüchen.

Nach einem Aspekt, der so nicht beansprucht ist, ist ein Verfahren zum Steuern einer Flugbewegung eines Fluggeräts zum Landen des Fluggeräts geschaffen, welches Folgendes aufweist: Erfassen von ersten Bilddaten mittels einer ersten Kameraeinrichtung, die an einem Fluggerät angeordnet und eingerichtet ist, einen Bodenbereich zu erfassen, wobei die ersten Bilddaten eine erste Folge von ersten Kamerabildern anzeigen; Erfassen von zweiten Bilddaten mittels einer zweiten Kameraeinrichtung, die an dem Fluggerät angeordnet und eingerichtet ist, den Bodenbereich zu erfassen, wobei die zweiten Bilddaten eine zweite Folge von zweiten Kamerabildern anzeigen; und Verarbeiten der ersten und der zweiten Bilddaten mittels einer Auswerteeinrichtung. Das Verarbeiten der ersten und der zweiten Bilddaten weist Folgendes auf: Ausführen einer ersten auf künstlicher Intelligenz basierenden Bildanalyse für die ersten Bilddaten, wobei hierbei mindestens ein erster Landebereich in dem erfassten Bodenbereich bestimmt wird; Ausführen einer zweiten Bildanalyse, die frei von künstlicher Intelligenz ausgeführt wird, für die zweiten Bilddaten, wobei hierbei mindestens ein zweiter Landebereich in dem erfassten Bodenbereich bestimmt wird; Bestimmen von Positionskoordinaten für einen freien Landebereich, welcher von dem ersten und dem zweiten Landebereich umfasst ist, wenn ein Vergleich ergibt, dass der erste und der zweite Landebereich im Bodenbereich zumindest in dem freien Landebereich überlappen; Empfangen von Positionskoordinaten für einen Ziellandeplatz von einer Steuereinrichtung des Fluggeräts; Bestimmen von Freigabekenndaten, wenn ein Vergleich der Positionskoordinaten für den freien Landebereich und der Positionskoordinaten für den Ziellandeplatz eine Übereinstimmung ergibt; und Übertragen von Freigabekenndaten, welche die Verfügbarkeit des Ziellandeplatzes für eine Landung anzeigen, an die Steuereinrichtung des Fluggeräts. Eine Flugbewegung des Fluggeräts wird zum Landen auf dem Ziellandeplatz durch die Steuereinrichtung gesteuert.

Nach einem Aspekt, der so nicht beansprucht ist, ist ein Verfahren zum Steuern einer Flugbewegung eines Fluggeräts zum Abwerfen einer Ladung durch das Fluggerät geschaffen, welches Folgendes aufweist: Erfassen von ersten Bilddaten mittels einer ersten Kameraeinrichtung, die an einem Fluggerät angeordnet und eingerichtet ist, einen Bodenbereich zu erfassen, wobei die ersten Bilddaten eine erste Folge von ersten Kamerabildern anzeigen; Erfassen von zweiten Bilddaten mittels einer zweiten Kameraeinrichtung, die an dem Fluggerät angeordnet und eingerichtet ist, den Bodenbereich zu erfassen, wobei die zweiten Bilddaten eine zweite Folge von zweiten Kamerabildern anzeigen; und Verarbeiten der ersten und der zweiten Bilddaten mittels einer Auswerteeinrichtung. Das Verarbeiten der ersten und der zweiten Bilddaten weist Folgendes auf: Ausführen einer ersten auf künstlicher Intelligenz basierenden Bildanalyse für die ersten Bilddaten, wobei hierbei mindestens ein erster Abwurfbereich zum Abwerfen einer Ladung des Fluggeräts in dem erfassten Bodenbereich bestimmt wird; Ausführen einer zweiten Bildanalyse, die frei von künstlicher Intelligenz ausgeführt wird, für die zweiten Bilddaten, wobei hierbei mindestens ein zweiter Abwurfbereich zum Abwerfen der Ladung des Fluggeräts in dem erfassten Bodenbereich bestimmt wird; Bestimmen von Positionskoordinaten für einen freien Abwurfbereich, welcher von dem ersten und dem zweiten Abwurfbereich umfasst ist, wenn ein Vergleich ergibt, dass der erste und der zweite Abwurfbereich im Bodenbereich zumindest in dem freien Abwurfbereich überlappen; Empfangen von Positionskoordinaten für einen Zielabwurfplatz von einer Steuereinrichtung des Fluggeräts; Bestimmen von Freigabekenndaten, wenn ein Vergleich der Positionskoordinaten für den freien Abwurfbereich und der Positionskoordinaten für den Zielabwurfplatz eine Übereinstimmung ergibt; und Übertragen von Freigabekenndaten, welche die Verfügbarkeit des Zielabwurfplatzes für den Abwurf der Ladung anzeigen, an die Steuereinrichtung des Fluggeräts. Eine Flugbewegung des Fluggeräts wird zum Abwerfen der Ladung auf dem Zielabwurfplatz durch die Steuereinrichtung gesteuert.

Nach einem weiteren Aspekt, der so nicht beansprucht ist, ist ein Fluggerät geschaffen, welches Folgendes aufweist: eine Sensoreinrichtung, die eine erste und eine zweite Kameraeinrichtung aufweist; eine Auswerteeinrichtung, die ein oder mehrere Prozessoren aufweist; und eine Steuereinrichtung, die eingerichtet ist, eine Flugbewegung des Fluggeräts zu steuern. Das Fluggerät ist zum Landen des Fluggeräts für Folgendes eingerichtet ist: Erfassen von ersten Bilddaten mittels einer ersten Kameraeinrichtung, die an einem Fluggerät angeordnet und eingerichtet ist, einen Bodenbereich zu erfassen, wobei die ersten Bilddaten eine erste Folge von ersten Kamerabi-Idern anzeigen; Erfassen von zweiten Bilddaten mittels einer zweiten Kameraeinrichtung, die an dem Fluggerät angeordnet und eingerichtet ist, den Bodenbereich zu erfassen, wobei die zweiten Bilddaten eine zweite Folge von zweiten Kamerabildern anzeigen; und Verarbeiten der ersten und der zweiten Bilddaten mittels einer Auswerteeinrichtung. Das Verarbeiten der ersten und der zweiten Bilddaten weist Folgendes auf: Ausführen einer ersten auf künstlicher Intelligenz basierenden Bildanalyse für die ersten Bilddaten, wobei hierbei mindestens ein erster Landebereich in dem erfassten Bodenbereich bestimmt wird; Ausführen einer zweiten Bildanalyse, die frei von künstlicher Intelligenz ausgeführt wird, für die zweiten Bilddaten, wobei hierbei mindestens ein zweiter Landebereich in dem erfassten Bodenbereich bestimmt wird; Bestimmen von Positionskoordinaten für einen freien Landebereich, welcher von dem ersten und dem zweiten Landebereich umfasst ist, wenn ein Vergleich ergibt, dass der erste und der zweite Landebereich im Bodenbereich zumindest in dem freien Landebereich überlappen; Empfangen von Positionskoordinaten für einen Ziellandeplatz von einer Steuereinrichtung des Fluggeräts; Bestimmen von Freigabekenndaten, wenn ein Vergleich der Positionskoordinaten für den freien Landebereich und der Positionskoordinaten für den Ziellandeplatz eine Übereinstimmung ergibt; und Übertragen von Freigabekenndaten, welche die Verfügbarkeit des Ziellandeplatzes für eine Landung anzeigen, an die Steuereinrichtung des Fluggeräts. Das Fluggerät ist eingerichtet, eine Flugbewegung zum Landen auf dem Ziellandeplatz zu steuern.

Nach einem weiteren Aspekt, der so nicht beansprucht ist, ist ein Fluggerät geschaffen, welches Folgendes aufweist: eine Sensoreinrichtung, die eine erste und eine zweite Kameraeinrichtung aufweist; eine Auswerteeinrichtung, die ein oder mehrere Prozessoren aufweist; und eine Steuereinrichtung, die eingerichtet ist, eine Flugbewegung des Fluggeräts zu steuern. Das Fluggerät ist zum Ausführen einer Landung für Folgendes eingerichtet ist: Erfassen von ersten Bilddaten mittels einer ersten Kameraeinrichtung, die an einem Fluggerät angeordnet und eingerichtet ist, einen Bodenbereich zu erfassen, wobei die ersten Bilddaten eine erste Folge von ersten Kamerabildern anzeigen; Erfassen von zweiten Bilddaten mittels einer zweiten Kameraeinrichtung, die an dem Fluggerät angeordnet und eingerichtet ist, den Bodenbereich zu erfassen, wobei die zweiten Bilddaten eine zweite Folge von zweiten Kamerabildern anzeigen; und Verarbeiten der ersten und der zweiten Bilddaten mittels einer Auswerteeinrichtung. Das Verarbeiten der ersten und der zweiten Bilddaten weist Folgendes auf: Ausführen einer ersten auf künstlicher Intelligenz basierenden Bildanalyse für die ersten Bild-daten, wobei hierbei mindestens ein erster Abwurfbereich zum Abwerfen einer Ladung des Fluggeräts in dem erfassten Bodenbereich bestimmt wird; Ausführen einer zweiten Bildanalyse, die frei von künstlicher Intelligenz ausgeführt wird, für die zweiten Bilddaten, wobei hierbei mindestens ein zweiter Abwurfbereich zum Abwerfen der Ladung des Fluggeräts in dem er-fassten Bodenbereich bestimmt wird; Bestimmen von Positionskoordinaten für einen freien Abwurfbereich, welcher von dem ersten und dem zweiten Abwurfbereich umfasst ist, wenn ein Vergleich ergibt, dass der erste und der zweite Abwurfbereich im Bodenbereich zumindest in dem freien Abwurfbereich überlappen; Empfangen von Positionskoordinaten für einen Zielabwurfplatz von einer Steuereinrichtung des Fluggeräts; Bestimmen von Freigabekenndaten, wenn ein Vergleich der Positionskoordinaten für den freien Abwurfbereich und der Positionskoordinaten für den Zielabwurfplatz eine Übereinstimmung ergibt; und Übertragen von Freigabekenndaten, welche die Verfügbarkeit des Zielabwurfplatzes für den Abwurf der Ladung anzeigen, an die Steuereinrichtung des Fluggeräts. Das Fluggerät ist eingerichtet, eine Flugbewegung des Fluggeräts zum Abwerfen der Ladung auf dem Zielabwurfplatz zu steuern. Die vorgeschlagene Technologie sieht bei dem Fluggerät mehrere Kameraeinrichtungen vor, die während der Flugbewegung jeweilige Bilddaten für die Umgebung des Fluggeräts erfassen, wobei die Bilddaten jeweils eine Folge von Kamerabildern anzeigen. Zur Auswertung der Bilddaten mittels der Auswerteeinrichtung ist eine redundante Bildanalyse vorgesehen, die mit einer auf künstlicher Intelligenz basierenden Bildanalyse sowie einer nicht auf künstlicher Intelligenz basierend (frei hiervon) Bildanalyse arbeitet, sodass in voneinander unabhängigen Bildanalysen geprüft wird, ob aus erfassten Bilddaten für den beobachteten Bodenbereich ein freier Lande- / Abwurfplatz bestimmten werden kann. Dieses ist dann der Fall, wenn mittels der ersten und der zweiten Bildanalyse bestimmte Lande- / Abwurfbereiche, die insbesondere frei von Bodenhindernissen sind, die die Landung / das Abwerfen der Ladung behindern können, einen Überlappungsbereich am Boden anzeigen, welcher dann ganz oder nur teilweise von dem freien Lande- / Abwurfplatz umfasst wird. Für den freien Lande- / Abwurfplatz werden Positionskoordinaten bestimmt, welche mit Positionskoordinaten für einen (beabsichtigten oder gewünschten) Ziellandeplatz verglichen werden. Bei Übereinstimmung werden Freigabekenndaten bereitgestellt, welche die Verfügbarkeit des Ziellande- / Zielabwurfplatzes anzeigen. Hierauf kann die Steuereinrichtung die Flugbewegung des Fluggeräts zum Landen / Abwerfen der Ladung entsprechend steuern. Sowohl eine Bildanalyse basierend auf künstlicher Intelligenz wie auch eine klassische (nicht auf künstlicher Intelligenz basierende) Bildanalyse werden unabhängig voneinander für die Auswertung der mit mehreren Kameraeinrichtungen erfassten Bilddaten eingesetzt.

Das Ausführen der ersten Bildanalyse und / oder der zweiten Bildanalyse kann weiterhin Folgendes umfassen: Bereitstellen von Hinderniskenndaten, die mindestens eine Kategorie von Bodenhindernissen anzeigen; Bestimmen eines Landebereichs als nicht für die Landung oder den Abwurf der Ladung geeignet, wenn bei der ersten und / oder bei der zweiten Bildanalyse unter Verwendung der Hinderniskenndaten festgestellt wird, dass in dem Lande- / Abwurfbereich ein Bodenhindernis angeordnet ist, welches der mindestens einen Kategorie von Bodenhindernissen zuordenbar ist; und Fortsetzen des Verarbeitens der ersten und der zweiten Bilddaten mittels der ersten und der zweiten Bildanalyse bis der freie Lande- / Abwurfbereich bestimmt wird.

Es können Hinderniskenndaten bereitgestellt werden, die eine oder mehrere der folgenden Kategorien von Bodenhindernissen anzeigen: bewegtes Bodenhindernis, stationäres Bodenhindernis, Mensch, Pflanze und Tier.

Bei der ersten Bildanalyse wird mittels eines optischen Flusses eine Bewegung für ein Bodenhindernis bestimmt. Ein optischer Fluss zeigt beispielsweise eine Bewegungsbahn für ein oder mehrere Bildpixel in den Kamerabildern an und kann so eine Bewegung für eventuell dem Bodenhindernis zugeordnete Bildpixel anzeigen, was ein Hinweis auf das Bodenhindernis ist, welches sich bewegt. Allgemein wird unter einem optischen Fluss einer Bildsequenz ein Vektorfeld einer in die Bildebene projizierten Geschwindigkeit eines oder mehrerer Bildpixel in den betrachteten Raum (Umgebung) verstanden. Der optische Fluss ist somit eine Repräsentation von Bewegungsinformationen im Rahmen der Bildanalyse.

Die ersten und die zweiten Bilddaten werden mittels einer Lichtbildkamera und einer Wärmebildkamera erfasst: Lichtbildkamera, Wärmebildkamera, Radarkamera, Eventkamera und Infrarotkamera. In einer Ausgestaltung kann vorgesehen sein, Bilddaten von mehr als zwei Kameraeinrichtungen mittels jeweiliger Bildanalyse zu untersuchen, um jeweils mindestens einen Lande- / Abwurfbereich zu bestimmen.

Die Eventkamera nutzt neuromorphische visuelle Sensoren. Anstatt eine Bildsequenz mit einer konstanten Frequenz zu liefern (Lichtbildkamera), senden Eventkameras (nur) Informationen von den Pixeln (Bilddaten), bei denen sich die Helligkeit signifikant verändert hat. Solche pixelweise Veränderungen wird auch als Events bezeichnet, welche mit einem Zeitstempel mit der Genauigkeit von Mikrosekunden versehen und unmittelbar danach asynchron übermittelt werden. Da nur nicht-redundante Informationen übertragen werden, sind Eventkameras energieeffizient und in der Lage, sehr schnelle Bewegungen zu erfassen. Damit nehmen sie den Zielkonflikt zwischen Energiebedarf und Latenz direkt in Angriff. Zudem können Eventkameras zum Einsatz kommen, die über einen Dynamikbereich von zum Beispiel über etwa 140 dB (im Vergleich zu Standardkameras mit typischerweise um die 60 dB) verfügen, weil jedes Pixel selbständig ist.

Die von der Lichtbildkamera gelieferten Bilddaten werden im Rahmen der ersten auf künstlicher Intelligenz basierenden Bildanalyse verarbeitet, zum Beispiel mittels eines neuronalem Netzes wie zum Beispiel CNN und so eine pixelweise Klassifikation durchzuführen, beispielweise kann pro Bildpixel eine Klasse: Gebäude, Vegetation, Mensch, Tier, Wasser oder dergleichen.

Die Sensorsignale der Wärmebildkamera (Bilddaten) werden mittels der zweiten Bildanalyse ausgewertet, die frei von künstlicher Intelligenz ausgeführt wird. Hierbei wird ein Schwellwertfilter für die Sensorsignale angewendet. Die Bilddaten der Wärmebildkamera eignen sich, um zum Beispiel Menschen, Tiere und / oder Fahrzeuge mittels deterministischer Analyse (beispielweise Schwellwertfilter) zu detektieren und zu bestimmen. Auch die Bilddaten der eventbasierten Kamera können hierfür alternativ oder ergänzend ausgewertet werden, da es sich um bewegte Objekte handelt. Hierbei kann ebenso ein Schwellwertfilter zur Bilddatenanalyse verwendet werden.

Bei dem Verfahren kann weiterhin Folgendes vorgesehen ist: Ausführen einer Sichtanalyse für die erste / zweite Kameraeinrichtung, wobei hierbei bestimmt wird, ob ein jeweiliges Er fassungssichtfeld (Kamerasichtfeld) der ersten / zweiten Kameraeinrichtung frei von einer Sichtfeld-Blockierung ist. Auf diese Weise wird sichergestellt, dass das Erfassungs- oder Detektionssichtfeld für die Kameraeinrichtungen jeweils nicht blockiert ist, sodass die Bilddaten mit ausreichender Sicherheit erfasst werden, um dann eine den Sicherheitsanforderungen für die Landung / den Abwurf der Ladung genügende Bildanalyse durchzuführen.

Bei der Sichtanalyse kann bestimmt werden, in welchem Umfang das Erfassungssichtfeld der ersten Kameraeinrichtung und / oder der zweiten Kameraeinrichtung blockiert ist, und in der Auswerteeinrichtung können Sichtfeldkenndaten bereitgestellt und an die Steuereinrichtung übertragen werden, die den Umfang der Blockierung des Erfassungssichtfelds anzeigen. Auf diese Weise empfängt die Steuereinrichtung des Fluggeräts Informationen darüber, ob und gegebenenfalls in welchem Umfang das Erfassungssichtfeld einer oder mehrerer Kameraeinrichtungen blockiert ist, beispielsweise aufgrund einer Verschmutzung. Hierauf können Sicherheitsmaßnahmen vorgenommen werden. Beispielsweise kann vorgesehen sein, die Bilddaten von einer Kameraeinrichtung, deren Erfassungssichtfeld teilweise blockiert ist, von der Bilddaten-analyse auszuschließen. Alternativ kann bei einer (teilweisen) Sichtfeld-Blockierung eine Landung und / oder ein Abwurf der Ladung verhindert werden, trotzdem zuvor ein freier Lande- / Abwurfplatz bestimmt.

Die Steuereinrichtung des Fluggeräts kann die Sichtfeldkenndaten prüfen und die Flugbewegung des Fluggeräts Notlandesteuersignale entsprechend steuern, wenn die Sichtfeldkenndaten einen Umfang der Blockierung des Erfassungssichtfelds für die erste Kameraeinrichtung und / oder die zweite Kameraeinrichtung anzeigen, welcher einen Schwellwert überschreitet, wobei die Notlandesteuersignale eingerichtet sind, eine Notlandung des Fluggeräts zu bewirken. Die Schwellwertüberschreitung zeigt in diesem Fall eine Situation an, bei der eine sichere Steuerung der Flugbewegung basierend auf den erfassten Bilddaten potentiell nicht mehr gegeben ist, weshalb die Notlandung eingeleitet wird. In Verbindung mit einer solchen Notladung kann vorgesehen sein, dass diese in einem Landebereich ausgeführt wird, der entweder nur bei der ersten Bildanalyse oder nur bei der zweiten Bildanalyse bestimmt wurde.

Bei der ersten Bildanalyse können mittels eines auf künstlicher Intelligenz basierenden Analysealgorithmus ein oder mehrere der folgenden Kennwerte für das Bodenhindernis bestimmt werden: Höhe des Bodenhindernisses, Breite des Bodenhindernisses und Konfidenzwert für die Bestimmung des Bodenhindernisses in den ersten Kamerabildern. Im Rahmen der auf künstlicher Intelligenz basierenden Bildanalyse kann vorgesehen sein, dass mittels des verwendeten Analysealgorithmus ein Rahmen oder eine Box um das Bodenhindernis in den ersten Kamerabildern bestimmt wird, wodurch ein Bildbereich der ersten Kamerabilder bestimmt wird, indem das Bodenhindernis mit gewisser Wahrscheinlichkeit vorhanden ist. Der Rahmen kann so bestimmt werden, dass er Außengrenzen des Bodenhindernisses in den ersten Kamerabildern anzeigt, woraus Höhe und / oder Breite des Bodenhindernisses bestimmt werden können.

Bei der ersten Bildanalyse mittels eines auf künstlicher Intelligenz basierenden Analysealgorithmus wird ein neuronales Netz verwendet. Das zuvor trainierte neuronale Netz prozessiert bei der auf künstlicher Intelligenz basierenden Bildanalyse direkt die Bilddaten. Es können verschiedenen Schichten des neuronalen Netzes durchlaufen werden, bis letztlich direkt Kennwerte in Bildkoordinaten (Pixelkoordinaten, Rahmengröße, Objektklasse sowie Konfidenzwert) geschätzt werden. Der Landebereich / Abwurfbereich kann mittels der Kameraparameter (Kalibrierung) aus den Kennwerten des neuronalen Netzes sowie der bestimmten Objektklasse ermittelt werden.

In einer Ausgestaltung wird die künstliche Intelligenz nutzende erste Bildanalyse mittels eines auf maschinellem Lernen basierenden Algorithmus und die zweite Bildanalyse, die frei von der Anwendung künstlicher Intelligenz ist, mittels eines nicht auf maschinellem Lernen basierenden Algorithmus ausgeführt.

Es kann somit ein Verfahren zum Steuern einer Flugbewegung eines Fluggeräts geschaffen sein, welches Folgendes aufweist: Erfassen von ersten Bilddaten mittels einer ersten Kameraeinrichtung, die an einem Fluggerät angeordnet und eingerichtet ist, einen Bodenbereich zu erfassen, wobei die ersten Bilddaten eine erste Folge von ersten Kamerabildern anzeigen; Erfassen von zweiten Bilddaten mittels einer zweiten Kameraeinrichtung, die an dem Fluggerät angeordnet und eingerichtet ist, den Bodenbereich zu erfassen, wobei die zweiten Bilddaten eine zweite Folge von zweiten Kamerabildern anzeigen; und Verarbeiten der ersten und der zweiten Bilddaten mittels einer Auswerteeinrichtung. Das Verarbeiten der ersten und der zweiten Bilddaten weist Folgendes auf: Ausführen einer ersten auf künstlicher Intelligenz basierenden Bildanalyse für die ersten Bilddaten, wobei hierbei mindestens ein erster Bodenbereich in dem erfassten Bodenbereich bestimmt wird; Ausführen einer zweiten Bildanalyse, die frei von künstlicher Intelligenz ausgeführt wird, für die zweiten Bilddaten, wobei hierbei mindestens ein zweiter Bodenbereich in dem erfassten Bodenbereich bestimmt wird; Bestimmen von Positionskoordinaten für einen freien Bodenbereich, welcher von dem ersten und dem zweiten Bodenbereich umfasst ist, wenn ein Vergleich ergibt, dass der erste und der zweite Bodenbereich zumindest in dem freien Bodenbereich überlappen; Empfangen von Positionskoordinaten für einen Zielort im überwachten Bodenbereich von einer Steuereinrichtung des Fluggeräts; Bestimmen von Freigabekenndaten, wenn ein Vergleich der Positionskoordinaten für den freien Bodenbereich und der Positionskoordinaten für den Zielort eine Übereinstimmung ergibt; und Übertragen von Freigabekenndaten, welche die Verfügbarkeit des Zielorts anzeigen, an die Steuereinrichtung des Fluggeräts. Eine Flugbewegung des Fluggeräts kann dann zum Abwerfen einer Ladung durch das Fluggerät und / oder Landen des Fluggeräts auf dem Zielort durch die Steuereinrichtung gesteuert.

Die vorangehend in Verbindung mit dem Verfahren zum Steuern der Flugbewegung des Fluggeräts erläuterten Ausgestaltungen können im Zusammenhang mit dem Fluggerät entsprechend vorgesehen sein. Bei dem Fluggerät kann es sich um ein bemanntes oder unbemanntes Fluggerät handeln.

Die Kameraeinrichtungen sowie die Auswerteeinrichtung können in einem Sensormodul oder -gerät gemeinsam aufgenommen sein, welches an den Fluggerät als lösbare Gesamteinheit montiert ist.

### Beschreibung von Ausführungsbeispielen

Nachfolgend werden weitere Ausführungsbeispiele unter Bezugnahme auf Figuren einer Zeichnung näher erläutert. Hierbei zeigen:
- Fig. 1: eine schematische Darstellung einer Anordnung mit einer Sensoreinrichtung und einer Auswerteeinrichtung und
- Fig. 2: eine schematische Darstellung für ein Verfahren zum Steuern einer Flugbewegung eines Fluggeräts.

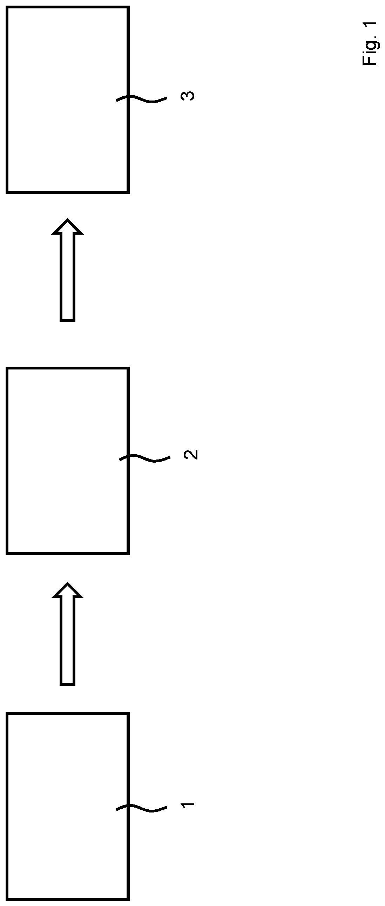

Fig. 1 zeigt eine schematische Darstellung einer Anordnung von funktionellen Komponenten zum Einsatz beim Steuern einer Flugbewegung eines Fluggeräts mit einer Sensoreinrichtung 1 und einer Auswerteeinrichtung 2, die eingerichtet ist, mittels der Sensoreinrichtung 1 erfasste Bilddaten auszuwerten, um in einem beobachteten Bodenbereich einen freien Bodenbereich zu bestimmen, sodass hiervon ausgehend eine Steuereinrichtung 3 des Fluggeräts die Flugbewegung des Fluggeräts so steuern kann, dass das Fluggerät in dem freien Bodenbereich landet (Steuerung einer Landung des Fluggeräts) und / oder eine Ladung des Fluggeräts auf den freien Bodenbereich abzuwerfen (Steuerung des Abwurfs einer Ladung des Fluggeräts).

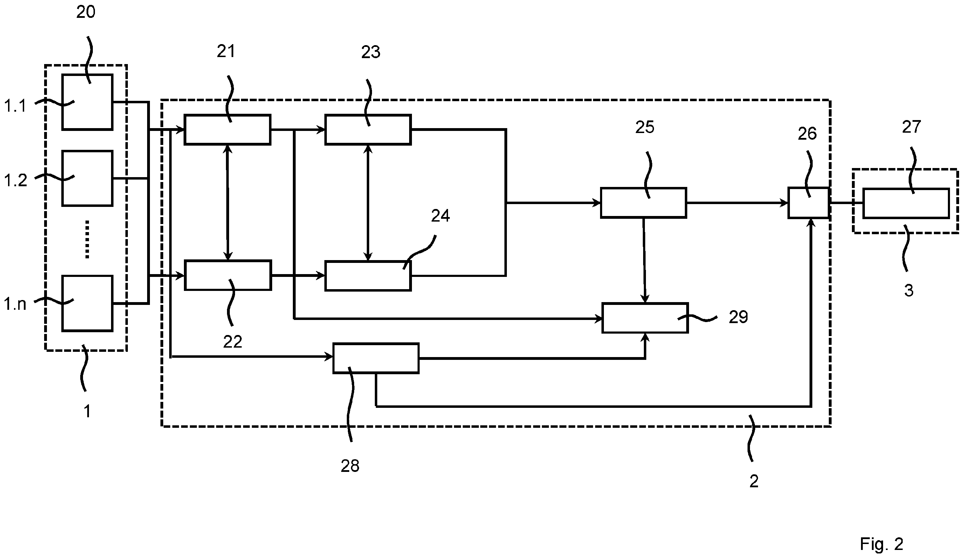

Die Sensoreinrichtung 1 umfasst gemäß Fig. 2 mehrere Kameraeinrichtungen 1.1, ..., 1.n, die jeweils eingerichtet sind, eine Umgebung des Fluggeräts während dessen Flugbewegung zu beobachten. Die mehreren Kameraeinrichtungen 1.1, ..., 1.n sind jeweils zum Boden hin ausgerichtet und eingerichtet, jeweilige Bilddaten für den beobachteten Bodenbereich zu erfassen, wobei die Bilddaten eine Folge von Kamerabildern anzeigen. Die Kameraeinrichtungen 1.1, ..., 1.n können beispielsweise eine oder mehrere der folgenden Kameraarten umfassen: Wärmebildkamera, Lichtbildkamera, Infrarotkamera, Multispektralkamera und eventbasierte Kamera.

Die in einem Schritt 20 erfassten Bilddaten werden von der Sensoreinrichtung 1 an die Auswerteeinrichtung 2 übermittelt, wo die Kamerabilder verarbeitet werden. Hierbei wird für die Bilddaten in der Auswerteeinrichtung 2 mittels Datenverarbeitung eine redundante Bildanalyse ausgeführt.

Vor einer Bildanalyse zum Bestimmen mindestens eines freien Bodenbereichs zum Landen und / oder Abwerfen einer Ladung ist bei dem Ausführungsbeispiel eine Datenvorverarbeitung in den Schritten 21 und 22 vorgesehen.

Hierbei werden im Schritt 21 erste Bilddaten, zum Beispiel RGB-Bilddaten (von Lichtbildkamera), einer ersten Kameraeinrichtung 1.1 in der Auswerteinrichtung 2 vorverarbeitet.

Im Schritt 21 werden unabhängig zweite Bilddaten, beispielweise Wärmebildkamera-Bilddaten, einer zweiten Kameraeinrichtung 1.2 in der Auswerteinrichtung 2 vorverarbeitet.

Sodann werden in einer ersten Bildanalyse (Schritt 23) die ersten Bilddaten mittels eines auf künstlicher Intelligenz basierenden Analysealgorithmus analysiert. Die erste Bildanalyse wird in einem Ausführungsbeispiel mittels eines neuronalen Netzes durchgeführt, zum Beispiel einem CNN (*"Convolutional Neural Network"*) oder einem Visual Transformer. Hierzu werden direkt die Pixeldaten als RGB-Werte vom neuronalen Netz verarbeitet und mittels unterschiedlicher Schichten verändert. Mittels des neuronalem Netzes wie zum Beispiel CNN kann eine pixelweise Klassifikation durchgeführt werden, beispielweise kann pro Bildpixel eine Klasse: Gebäude, Vegetation, Mensch, Tier, Wasser oder dergleichen. Die Ausgabe des neuronalen Netzes sind direkt die Kennwerte in Bildkoordinaten. Das neuronale Netz wurde vorher mittels Trainingsdaten trainiert, wie dies als solches in verschiedenen Ausführungsformen bekannt ist.

Unabhängig von der auf künstlicher Intelligenz basierenden ersten Bildanalyse werden die zweiten Bilddaten von der Sensoreinrichtung 1 in einer zweiten Bildanalyse analysiert (Schritt 24), wobei die zweite Bildanalyse mittels eines klassischen Analysealgorithmus ausgeführt wird, welcher frei von künstlicher Intelligenz ist. In der zweiten Bildanalyse können zum Beispiel die Bilddaten von wenigstens einer zweiten Kameraeinrichtung 1.2 ausgewertet werden. Hierbei kann ein Schwellwertfilter für die Sensorsignale von der Wärmebildkamera angewendet werden, welcher bildpixelweise die Wärme pro Pixel wiedergibt. Die Bilddaten der Wärmebildkamera eignen sich, um zum Beispiel Menschen, Tiere und / oder Fahrzeuge mittels deterministischer Analyse (beispielweise Schwellwertfilter) zu detektieren und zu bestimmen. Auch die Bilddaten der eventbasierten Kamera können hierfür alternativ oder ergänzend ausgewertet werden, da es sich um bewegte Objekte handelt. Hierbei kann ebenso ein Schwellwertfilter zur Bilddatenanalyse verwendet werden.

Beide unabhängig voneinander ausgeführten Bildanalysen dienen dazu, zu prüfen, ob die Bilddaten einen freien Bodenbereich anzeigen, welcher für eine Landung und / oder einen Abwurf einer Ladung aktuell zur Verfügung steht.

Im Schritt 25 werden die Ergebnisse der beiden Bildanalysen zusammengeführt. Eine Bestimmen von Positionskoordinaten für einen freien Bodenbereich (Landebereich / Abwurfbereich) erfolgt hierbei dann, wenn der freie Bodenbereich in einem Überlappungsbereich eines ersten Bodenbereichs, welcher im Rahmen der ersten Bildanalyse bestimmt wurde, und eines zweiten Bodenbereichs liegt, welcher im Rahmen der zweiten Bildanalyse unabhängig von der ersten Bildanalyse bestimmt wurde. Hierbei werden in der Auswerteeinrichtung 2 von der Steuereinrichtung 3 des Fluggeräts Positionskoordinaten für einen Zielbereich / -ort empfangen, die einen gewünschten Zielort zum Landen des Fluggeräts und / oder zum Abwerfen einer Ladung durch das Fluggerät anzeigen. Es werden hierauf Freigabekenndaten in der Auswerteinrichtung 2 bestimmt, wenn ein Vergleich der Positionskoordinaten für den gefundenen freien Bodenbereich und der Positionskoordinaten für den Zielbereich am Boden eine Übereinstimmung ergibt, sodass der gewünschte Zielort verfügbar ist. Andernfalls kann die Suche nach einem freien Bodenbereich dem vorangehend beschriebenen Verfahren entsprechend fortgesetzt werden. Alternativ kann das Steuergerät 3 des Fluggeräts geänderte Positionskoordinaten für einen alternativen Zielbereich / -ort bereitstellen, worauf für die geänderte Positionskoordinaten der Vergleich mit den Positionskoordinaten für den gefundenen freien Bodenbereich ausgeführt werden kann.

Die Freigabekenndaten werden dann im Schritt 26 zur Übertragung an die Steuereinrichtung 3 des Fluggeräts an einer Schnittstelle bereitgestellt und übertragen, worauf das Fluggerät von der Steuereinrichtung 3 zum Landen und / Abwerfen der Ladung entsprechend gesteuert wird (Schritt 28).

Um die Sicherheit der Bestimmung des freien oder geeigneten Bodenbereichs weiter zu erhöhen, ist bei dem dargestellten Ausführungsbeispiel im Schritt 28 optional vorgesehen, vor dem Bestimmen der Positionskoordinaten für den freien Bodenbereich und / oder vor dem Übertragen der Freigabekenndaten an die Steuereinrichtung 3 eine Sichtanalyse für eine oder mehrere der Kameraeinrichtungen 1.1, ..., 1.n durchzuführen. Mittels der Sichtanalyse wird geprüft, ob ein jeweils zugeordnetes Erfassungssichtfeld der Kameraeinrichtungen 1.1, ..., 1.n eventuell zumindest teilweise blockiert ist. Ist das Erfassungssichtfeld blockiert, kann die zugeordnete Kameraeinrichtung eventuell ihre Sensoraufgabe nicht mehr zuverlässig erfüllen. Hierbei kann vorgesehen sein, Sichtfeldkenndaten zu erzeugen und an die Steuereinrichtung 3 zu übermitteln, wobei die Sichtfeldkenndaten anzeigen, ob und gegebenenfalls in welchem Umfang das Erfassungssichtfeld einer oder mehrerer der Kameraeinrichtungen 1.1, ..., 1.n blockiert ist. Überschreitet der Umfang einer Blockierung für wenigstens ein Erfassungssichtfeld einen Schwellwert, kann die Steuereinrichtung 3 zum Beispiel die vorherige Bestimmung des freien Bodenbereichs verwerfen und trotz des gefundenen freien Bodenbereichs keine Freigabekenndaten an die Steuereinrichtung 3 übermitteln. Alternativ oder ergänzend kann eine Notlandung des Fluggeräts initiiert werden.

Es kann vorgesehen sein, in Ergänzung zu der Sichtanalyse oder alternativ hierzu (Schritt 29) eine oder weitere Prüfungen für die Sensoreinrichtung 1 und / oder der Auswerteeinrichtung 2 durchzuführen. Hierzu werden zum Beispiel ein Systemstatus, beispielweise Stromversorgung und / oder Auslastung einer Prozessoreinheit, die aktuelle Laufzeit der künstlichen Intelligenz und / oder eine Zeitsynchronisation der Kameraeinrichtungen 1.1, ..., 1.n fortdauernd überwacht, sei es einzeln oder in Gruppen, beispielweise in regelmäßigen Zeitintervallen.

Ausgehend von den von der Auswerteeinrichtung 2 erhaltenen Freigabekenndaten steuert dann die Steuereinrichtung 3 das Fluggerät, derart, dass eine Landung des Fluggeräts und / oder ein Abwurf einer Ladung durch das Fluggerät im Zielbereich (Ziellandeplatz / -ort, Zielabwurfplatz / -ort) ausgeführt werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Steuern einer Flugbewegung eines Fluggeräts zum Landen des Fluggeräts, mit
- Erfassen von ersten Bilddaten mittels einer ersten Kameraeinrichtung (1.1), die an einem Fluggerät angeordnet und eingerichtet ist, einen Bodenbereich zu erfassen, wobei die ersten Bilddaten eine erste Folge von ersten Kamerabildern anzeigen;
- Erfassen von zweiten Bilddaten mittels einer zweiten Kameraeinrichtung (1.2), die an dem Fluggerät angeordnet und eingerichtet ist, den Bodenbereich zu erfassen, wobei die zweiten Bilddaten eine zweite Folge von zweiten Kamerabildern anzeigen;
- Verarbeiten der ersten und der zweiten Bilddaten mittels einer Auswerteeinrichtung (2), aufweisend:
- Ausführen einer ersten auf einem neuronalen Netz basierenden Bildanalyse für die ersten Bilddaten, wobei hierbei mindestens ein erster Landebereich in dem erfassten Bodenbereich bestimmt wird;
- Ausführen einer zweiten Bildanalyse, die frei von künstlicher Intelligenz ausgeführt wird, für die zweiten Bilddaten, wobei hierbei mindestens ein zweiter Landebereich in dem erfassten Bodenbereich bestimmt wird;
- Bestimmen von Positionskoordinaten für einen freien Landebereich, welcher von dem ersten und dem zweiten Landebereich umfasst ist, wenn ein Vergleich ergibt, dass der erste und der zweite Landebereich im Bodenbereich zumindest in dem freien Landebereich überlappen;
- Empfangen von Positionskoordinaten für einen Ziellandeplatz von einer Steuereinrichtung (3) des Fluggeräts;
- Bestimmen von Freigabekenndaten, wenn ein Vergleich der Positionskoordinaten für den freien Landebereich und der Positionskoordinaten für den Ziellandeplatz eine Übereinstimmung ergibt; und
- Übertragen von Freigabekenndaten, welche die Verfügbarkeit des Ziellandeplatzes für eine Landung anzeigen, an die Steuereinrichtung (3) des Fluggeräts; und
- Steuern einer Flugbewegung des Fluggeräts zum Landen auf dem Ziellandeplatz durch die Steuereinrichtung (3);
wobei die erste Kameraeinrichtung (1.1) eine Lichtbildkamera ist und das Ausführen der ersten Bildanalyse umfasst, mittels eines optischen Flusses Bewegungen in den ersten Bilddaten zu ermitteln, um ein Bodenhindernis zu bestimmen;
wobei die zweite Kameraeinrichtung (1.2) eine Wärmebildkamera ist und das Ausführen der zweiten Bildanalyse umfasst, mittels eines Schwellwertfilters Wärme in den zweiten Bilddaten zu ermitteln, und
wobei ein Landebereich als nicht für die Landung geeignet bestimmt wird, wenn bei der ersten und/oder bei der zweiten Bildanalyse festgestellt wird, dass in dem Landebereich ein Bodenhindernis angeordnet ist.

2. Verfahren zum Steuern einer Flugbewegung eines Fluggeräts zum Abwerfen einer Ladung durch das Fluggerät, mit
- Erfassen von ersten Bilddaten mittels einer ersten Kameraeinrichtung (1.1), die an einem Fluggerät angeordnet und eingerichtet ist, einen Bodenbereich zu erfassen, wobei die ersten Bilddaten eine erste Folge von ersten Kamerabildern anzeigen;
- Erfassen von zweiten Bilddaten mittels einer zweiten Kameraeinrichtung (1.2), die an dem Fluggerät angeordnet und eingerichtet ist, den Bodenbereich zu erfassen, wobei die zweiten Bilddaten eine zweite Folge von zweiten Kamerabildern anzeigen;
- Verarbeiten der ersten und der zweiten Bilddaten mittels einer Auswerteeinrichtung (2), aufweisend:
- Ausführen einer ersten auf einem neuronalen Netz basierenden Bildanalyse für die ersten Bilddaten, wobei hierbei mindestens ein erster Abwurfbereich zum Abwerfen einer Ladung des Fluggeräts in dem erfassten Bodenbereich bestimmt wird;
- Ausführen einer zweiten Bildanalyse, die frei von künstlicher Intelligenz ausgeführt wird, für die zweiten Bilddaten, wobei hierbei mindestens ein zweiter Abwurfbereich zum Abwerfen der Ladung des Fluggeräts in dem erfassten Bodenbereich bestimmt wird;
- Bestimmen von Positionskoordinaten für einen freien Abwurfbereich, welcher von dem ersten und dem zweiten Abwurfbereich umfasst ist, wenn ein Vergleich ergibt, dass der erste und der zweite Abwurfbereich im Bodenbereich zumindest in dem freien Abwurfbereich überlappen;
- Empfangen von Positionskoordinaten für einen Zielabwurfplatz von einer Steuereinrichtung (3) des Fluggeräts;
- Bestimmen von Freigabekenndaten, wenn ein Vergleich der Positionskoordinaten für den freien Abwurfbereich und der Positionskoordinaten für den Zielabwurfplatz eine Übereinstimmung ergibt; und
- Übertragen von Freigabekenndaten, welche die Verfügbarkeit des Zielabwurfplatzes für den Abwurf der Ladung anzeigen, an die Steuereinrichtung (3) des Fluggeräts; und
- Steuern einer Flugbewegung des Fluggeräts zum Abwerfen der Ladung auf dem Zielabwurfplatz durch die Steuereinrichtung (3);
wobei die erste Kameraeinrichtung (1.1) eine Lichtbildkamera ist und das Ausführen der ersten Bildanalyse umfasst, mittels eines optischen Flusses Bewegungen in den ersten Bilddaten zu ermitteln, um ein Bodenhindernis zu bestimmen;
wobei die zweite Kameraeinrichtung (1.2) eine Wärmebildkamera ist und das Ausführen der zweiten Bildanalyse umfasst, mittels eines Schwellwertfilters Wärme in den zweiten Bilddaten zu ermitteln, und
wobei ein Landebereich als nicht für den Abwurf der Ladung geeignet bestimmt wird, wenn bei der ersten und/oder bei der zweiten Bildanalyse festgestellt wird, dass in dem Landebereich ein Bodenhindernis angeordnet ist.

3. Verfahren nach Anspruch 1 oder 2, **dadurch gekennzeichnet, dass** das Ausführen der ersten Bildanalyse und / oder der zweiten Bildanalyse weiterhin Folgendes umfasst:
- Bereitstellen von Hinderniskenndaten, die mindestens eine Kategorie von Bodenhindernissen anzeigen;
- Bestimmen eines Landebereichs als nicht für die Landung oder den Abwurf der Ladung geeignet, wenn bei der ersten und / oder bei der zweiten Bildanalyse unter Verendung der Hinderniskenndaten festgestellt wird, dass in dem Lande-/Abwurfbereich ein Bodenhindernis angeordnet ist, welches der mindestens einen Kategorie von Bodenhindernissen zuordenbar ist; und
- Fortsetzen des Verarbeitens der ersten und der zweiten Bilddaten mittels der ersten und der zweiten Bildanalyse bis der freie Lande- / Abwurfbereich bestimmt wird.

4. Verfahren nach Anspruch 3, **dadurch gekennzeichnet, dass** Hinderniskenndaten bereitgestellt werden, die eine oder mehrere der folgenden Kategorien von Bodenhindernissen anzeigen: bewegtes Bodenhindernis, stationäres Bodenhindernis, Mensch, Pflanze und Tier.

5. Verfahren nach mindestens einem der vorangehenden Ansprüche, **dadurch gekennzeichnet, dass** weiterhin Folgendes vorgesehen ist: Ausführen einer Sichtanalyse für die erste / zweite Kameraeinrichtung, wobei hierbei bestimmt wird, ob ein jeweiliges Erfassungssichtfeld der ersten / zweiten Kameraeinrichtung frei von einer Sichtfeld-Blockierung ist.

6. Verfahren nach Anspruch 5, **dadurch gekennzeichnet, dass** bei der Sichtanalyse bestimmt wird, in welchem Umfang das Erfassungssichtfeld der ersten Kameraeinrichtung und / oder der zweiten Kameraeinrichtung blockiert ist, und in der Auswerteeinrichtung (2) Sichtfeldkenndaten bereitgestellt und an die Steuereinrichtung (3) übertragen werden, die den Umfang der Blockierung des Erfassungssichtfelds anzeigen.

7. Verfahren nach Anspruch 6, **dadurch gekennzeichnet, dass** die Steuereinrichtung (3) die Sichtfeldkenndaten prüft und die Flugbewegung des Fluggeräts Notlandesteuersignale entsprechend steuert, wenn die Sichtfeldkenndaten einen Umfang der Blockierung des Erfassungssichtfelds für die erste Kameraeinrichtung und / oder die zweite Kameraeinrichtung anzeigen, welcher einen Schwellwert überschreitet, wobei die Notlandesteuersignale eingerichtet sind, eine Notlandung des Fluggeräts zu bewirken.

8. Fluggerät, mit
- einer Sensoreinrichtung (1), die eine erste und eine zweite Kameraeinrichtung aufweist;
- einer Auswerteeinrichtung (2), die ein oder mehreren Prozessoren aufweist; und
- einer Steuereinrichtung (3), die eingerichtet ist, einen Betrieb des Fluggeräts zu steuern;
wobei das Fluggerät zum Ausführen einer Landung für Folgendes eingerichtet ist:
- Erfassen von ersten Bilddaten mittels einer ersten Kameraeinrichtung, die an einem Fluggerät angeordnet und eingerichtet ist, einen Bodenbereich zu erfassen, wobei die ersten Bilddaten eine erste Folge von ersten Kamerabildern anzeigen;
- Erfassen von zweiten Bilddaten mittels einer zweiten Kameraeinrichtung, die an dem Fluggerät angeordnet und eingerichtet ist, den Bodenbereich zu erfassen, wobei die zweiten Bilddaten eine zweite Folge von zweiten Kamerabildern anzeigen;
- Verarbeiten der ersten und der zweiten Bilddaten mittels einer Auswerteeinrichtung (2), aufweisend:
- Ausführen einer ersten auf einem neuronalen Netz basierenden Bildanalyse für die ersten Bilddaten, wobei hierbei mindestens ein erster Landebereich in dem erfassten Bodenbereich bestimmt wird;
- Ausführen einer zweiten Bildanalyse, die frei von künstlicher Intelligenz ausgeführt wird, für die zweiten Bilddaten, wobei hierbei mindestens ein zweiter Landebereich in dem erfassten Bodenbereich bestimmt wird;
- Bestimmen von Positionskoordinaten für einen freien Landebereich, welcher von dem ersten und dem zweiten Landebereich umfasst ist, wenn ein Vergleich ergibt, dass der erste und der zweite Landebereich im Bodenbereich zumindest in dem freien Landebereich überlappen;
- Empfangen von Positionskoordinaten für einen Ziellandeplatz von einer Steuereinrichtung (3) des Fluggeräts;
- Bestimmen von Freigabekenndaten, wenn ein Vergleich der Positionskoordinaten für den freien Landebereich und der Positionskoordinaten für den Ziellandeplatz eine Übereinstimmung ergibt; und
- Übertragen von Freigabekenndaten, welche die Verfügbarkeit des Ziellandeplatzes für eine Landung anzeigen, an die Steuereinrichtung (3) des Fluggeräts; und
- Steuern einer Flugbewegung des Fluggeräts zum Landen auf dem Ziellandeplatz durch die Steuereinrichtung (3);
wobei die erste Kameraeinrichtung (1.1) eine Lichtbildkamera ist und das Ausführen der ersten Bildanalyse umfasst, mittels eines optischen Flusses Bewegungen in den ersten Bilddaten zu ermitteln, um ein Bodenhindernis zu bestimmen;
wobei die zweite Kameraeinrichtung (1.2) eine Wärmebildkamera ist und das Ausführen der zweiten Bildanalyse umfasst, mittels eines Schwellwertfilters Wärme in den zweiten Bilddaten zu ermitteln, und
wobei ein Landebereich als nicht für die Landung geeignet bestimmt wird, wenn bei der ersten und/oder bei der zweiten Bildanalyse festgestellt wird, dass in dem Landebereich ein Bodenhindernis angeordnet ist.

9. Fluggerät, mit
- einer Sensoreinrichtung (1), die eine erste und eine zweite Kameraeinrichtung aufweist;
- einer Auswerteeinrichtung (2), die ein oder mehreren Prozessoren aufweist; und
- einer Steuereinrichtung (3), die eingerichtet ist, einen Betrieb des Fluggeräts zu steuern;
wobei das Fluggerät zum Abwerfen einer Ladung durch das Fluggerät für Folgendes eingerichtet ist:
- Erfassen von ersten Bilddaten mittels einer ersten Kameraeinrichtung, die an einem Fluggerät angeordnet und eingerichtet ist, einen Bodenbereich zu erfassen, wobei die ersten Bilddaten eine erste Folge von ersten Kamerabildern anzeigen;
- Erfassen von zweiten Bilddaten mittels einer zweiten Kameraeinrichtung, die an dem Fluggerät angeordnet und eingerichtet ist, den Bodenbereich zu erfassen, wobei die zweiten Bilddaten eine zweite Folge von zweiten Kamerabildern anzeigen;
- Verarbeiten der ersten und der zweiten Bilddaten mittels einer Auswerteeinrichtung (2), aufweisend:
- Ausführen einer ersten auf einem neuronalen Netz basierenden Bildanalyse für die ersten Bilddaten, wobei hierbei mindestens ein erster Abwurfbereich zum Abwerfen einer Ladung des Fluggeräts in dem erfassten Bodenbereich bestimmt wird;
- Ausführen einer zweiten Bildanalyse, die frei von künstlicher Intelligenz ausgeführt wird, für die zweiten Bilddaten, wobei hierbei mindestens ein zweiter Abwurfbereich zum Abwerfen der Ladung des Fluggeräts in dem erfassten Bodenbereich bestimmt wird;
- Bestimmen von Positionskoordinaten für einen freien Abwurfbereich, welcher von dem ersten und dem zweiten Abwurfbereich umfasst ist, wenn ein Vergleich ergibt, dass der erste und der zweite Abwurfbereich im Bodenbereich zumindest teilweise überlappen;
- Empfangen von Positionskoordinaten für einen Zielabwurfplatz von einer Steuereinrichtung (3) des Fluggeräts;
- Bestimmen von Freigabekenndaten, wenn ein Vergleich der Positionskoordinaten für den freien Abwurfbereich und der Positionskoordinaten für den Zielabwurfplatz eine Übereinstimmung ergibt; und
- Übertragen von Freigabekenndaten, welche die Verfügbarkeit des Zielabwurfplatzes für den Abwurf der Ladung anzeigen, an die Steuereinrichtung (3) des Fluggeräts; und
- Steuern einer Flugbewegung des Fluggeräts zum Abwerfen der Ladung auf dem Zielabwurfplatz durch die Steuereinrichtung (3);
wobei die erste Kameraeinrichtung (1.1) eine Lichtbildkamera ist und das Ausführen der ersten Bildanalyse umfasst, mittels eines optischen Flusses Bewegungen in den ersten Bilddaten zu ermitteln, um ein Bodenhindernis zu bestimmen;
wobei die zweite Kameraeinrichtung (1.2) eine Wärmebildkamera ist und das Ausführen der zweiten Bildanalyse umfasst, mittels eines Schwellwertfilters Wärme in den zweiten Bilddaten zu ermitteln, und
wobei ein Landebereich als nicht für den Abwurf der Ladung geeignet bestimmt wird, wenn bei der ersten und/oder bei der zweiten Bildanalyse festgestellt wird, dass in dem Landebereich ein Bodenhindernis angeordnet ist.

10. Fluggerät nach Anspruch 8 oder 9, ausgebildet als unbemanntes Fluggerät.

## Claims

1. Method for the control of a flight manoeuvre of an aircraft for purposes of landing the aircraft, comprising:
- recording of initial image data by means of a first camera unit (1.1), which is arranged on an aircraft, and is configured to record a ground area, wherein the initial image data display an initial sequence of first camera images;
- recording of second image data by means of a second camera unit (1.2), which is arranged on the aircraft, and is configured to record the ground area, wherein the second image data display a second sequence of second camera images;
- processing of the initial and second image data by means of an evaluation unit (2), comprising:
- execution of an initial neural network-based image analysis on the initial image data, wherein here at least one first landing zone is determined in the recorded ground area;
- execution of a second image analysis, which is executed free of artificial intelligence, on the second image data, wherein here at least one second landing zone is determined in the recorded ground area;
- determination of position coordinates for an unoccupied landing zone, which is covered by the first and second landing zones, if a comparison shows that the first and second landing zones overlap in the ground area, at least in the unoccupied landing zone;
- reception of position coordinates for a target landing site from a control unit (3) of the aircraft;
- determination of clearance specifications if a comparison of the position coordinates for the unoccupied landing zone and the position coordinates for the target landing site results in a match; and
- transmittance of clearance specifications indicating the availability of the target landing site for landing to the control unit (3) of the aircraft; and
- control of a flight manoeuvre of the aircraft by the control unit (3) so as to land at the target landing site;
wherein the first camera unit (1.1) is a light imaging camera and comprises the execution of the initial image analysis by means of an optical flow to detect movements in the initial image data, so as to determine a ground obstacle;
wherein the second camera unit (1.2) is a thermal imaging camera, and the execution of the second image analysis includes the detection of heat in the second image data by means of a threshold filter, and
wherein a landing zone is determined to be unsuitable for landing if it is determined during the initial and/or second image analyses that a ground obstacle is located in the landing zone.

2. Method for the control of a flight manoeuvre of an aircraft for purposes of dropping a load from the aircraft, comprising:
- recording of initial image data by means of a first camera unit (1.1), which is arranged on an aircraft, and is configured to record a ground area, wherein the initial image data display an initial sequence of first camera images;
- recording of second image data by means of a second camera unit (1.2), which is arranged on the aircraft, and is configured to record the ground area, wherein the second image data display a second sequence of second camera images;
- processing of the initial and second image data by means of an evaluation unit (2), comprising:
- execution of an initial neural network-based image analysis on the initial image data, wherein here at least one first drop zone for purposes of dropping a load from the aircraft is determined in the recorded ground area.
- execution of a second image analysis, which is executed free of artificial intelligence, on the second image data, wherein here at least one second drop zone is determined for purposes of dropping the load from the aircraft in the recorded ground area;
- determination of position coordinates for an unoccupied drop zone, which is covered by the first and second drop zones, if a comparison shows that the first and second drop zones overlap in the ground area, at least in the unoccupied drop zone;
- reception of position coordinates for a target drop zone from a control unit (3) of the aircraft;
- determination of clearance specifications, if a comparison of the position coordinates for the unoccupied drop zone and the position coordinates for the target drop location results in a match; and
- transmittance of clearance specifications which indicate to the control unit (3) of the aircraft the availability of the target drop site for purposes of dropping the load; and
- control of a flight manoeuvre of the aircraft by means of the control unit (3). for purposes of dropping the load on the target drop site;
wherein the first camera unit (1.1) is a light imaging camera, and executes the initial image analysis, to detect, by means of an optical flow, movements in the initial image data, in order to determine a ground obstacle;
wherein the second camera unit (1.2) is a thermal imaging camera, and executes the second image analysis, in order to detect heat in the second image data by means of a threshold filter, and
wherein a landing zone is determined to be unsuitable for purposes of dropping the load if it is determined during the initial and/or second image analyses that a ground obstacle is located in the landing zone.

3. Method in accordance with Claim 1 or 2, **characterised in that** the execution of the initial image analysis and/or the second image analysis further comprises the following:
- provision of obstacle specifications, which indicate at least one category of ground obstacles;
- determination of a landing zone as unsuitable for landing or dropping the load if it is established, using the obstacle characteristics, in the initial and/or the second image analysis, that a ground obstacle is located in the landing/drop zone, which can be assigned to at least one category of ground obstacles; and
- continuation of the processing of the initial and second image data, by means of the initial and second image analyses, until the unoccupied landing/drop zone is determined.

4. Method in accordance with Claim 3, **characterised in that**, obstacle characteristics are provided, which indicate one or more of the following categories of ground obstacles: a moving ground obstacle, a stationary ground obstacle, a person, a plant, or an animal.

5. Method in accordance with at least one of the preceding claims, **characterised in that** furthermore the following is provided: execution of a visual analysis for the first/second camera unit, wherein it is here determined whether a particular recorded field of view of the first/second camera unit is free of any field of view blockage.

6. Method in accordance with Claim 5, **characterised in that** in the course of the visual analysis the extent to which the detection field of view of the first camera unit and/or the second camera unit is blocked is determined, and field of view characteristics are prepared in the evaluation unit (2) and transmitted to the control unit (3); these indicate the extent to which the recorded field of view is blocked.

7. Method in accordance with Claim 6, **characterised in that** the control unit (3) checks the field of view characteristics, and controls the flight manoeuvre of the aircraft in accordance with emergency landing control signals, if the field of view characteristics indicate an extent of blockage of the recorded field of view for the first camera unit, and/or the second camera unit, which exceeds a threshold value, wherein the emergency landing control signals are set up to effect an emergency landing of the aircraft.

8. Aircraft, comprising:
- a sensor unit (1), which has a first and a second camera unit;
- an evaluation unit (2), which has one or a plurality of processors; and
- a control unit (3), which is configured to control the operation of the aircraft;
wherein the aircraft is configured to execute a landing for the following:
- recording of initial image data by means of a first camera unit, which is arranged on an aircraft, and is configured to record a ground area, wherein the initial image data display an initial sequence of first camera images;
- recording of second image data by means of a second camera unit, which is arranged on the aircraft, and is configured to record the ground area, wherein the second image data display a second sequence of second camera images;
- processing of the initial and second image data by means of an evaluation unit (2), which comprises:
- execution of an initial neural network-based image analysis on the initial image data, wherein at least one first landing zone is determined in the recorded ground area;
- execution of a second image analysis, which is executed free of artificial intelligence, on the second image data, wherein here at least one second landing zone is determined in the recorded ground area;
- determination of position coordinates for an unoccupied landing zone, which is covered by the first and second landing zones, if a comparison shows that the first and second landing zones overlap in the ground area, at least in the unoccupied landing zone;
- reception of position coordinates for a target landing site from a control unit (3) of the aircraft;
- determination of clearance specifications when a comparison of the position coordinates for the unoccupied landing zone and the position coordinates for the target landing site results in a match; and
- transmittance of clearance specifications to the control unit (3) of the aircraft, indicating the availability of the target landing site for a landing; and
- control of a flight manoeuvre of the aircraft by the control unit (3); for purposes of landing on the target landing site,
wherein the first camera unit (1.1) is a light imaging camera, and executes the initial image analysis by means of an optical flow, to determine manoeuvres in the initial image data in order to determine a ground obstacle;
wherein the second camera unit (1.2) is a thermal imaging camera, and the execution of the second image analysis comprises the detection of heat in the second image data by means of a threshold filter, and
wherein a landing area is determined to be unsuitable for landing if it is determined during the initial and/or second image analysis that a ground obstacle is located in the landing area.

9. Aircraft, comprising:
- a sensor unit (1), which has a first and a second camera unit;
- an evaluation unit (2), which comprises one or more processors; and
- a control unit (3), which is configured to control an operation of the aircraft;
wherein the aircraft is configured for the following, for purposes of dropping a load from the aircraft:
- recording of initial image data by means of a first camera unit, which is arranged on an aircraft, and is configured to record a ground area, wherein the initial image data displays an initial sequence of first camera images;
- recording of second image data by means of a second camera unit, which is arranged on the aircraft, and is configured to record the ground area, wherein the second image data displays a second sequence of second camera images;
- processing of the initial and second image data by means of an evaluation unit (2), comprising:
- execution of an initial neural network-based image analysis on the initial image data, wherein at least one first drop zone is determined, for purposes of dropping a load from the aircraft in the recorded ground area;
- execution of a second image analysis, which is executed free of artificial intelligence, on the second image data, wherein here at least one second drop zone is determined, for purposes of dropping a load from the aircraft in the recorded ground area;
- determination of position coordinates for an unoccupied drop zone, which is covered by the first and second drop zones, if a comparison shows that the first and second drop zones at least partially overlap in the ground area;
- reception of position coordinates for a target drop location from a control unit (3) of the aircraft;
- determination of clearance specifications, if a comparison of the position coordinates for the unoccupied drop zone and the position coordinates for the target drop location results in a match; and
- transmittance of clearance specifications to the control unit (3) of the aircraft, indicating the availability of the target drop zone for purposes of dropping the load; and
- control of a flight manoeuvre of the aircraft for purposes of dropping the load on the target drop site by the control unit (3);
wherein the first camera unit (1.1) is a light imaging camera and executes the initial image analysis to detect movements in the initial image data by means of an optical flow to determine a ground obstacle;
wherein the second camera unit (1.2) is a thermal imaging camera and the execution of the second image analysis comprises the detection of heat in the second image data by means of a threshold filter, and
wherein a landing area is determined to be unsuitable for purposes of dropping the load if it is determined during the initial and/or second image analysis that a ground obstacle is located in the landing zone.

10. Aircraft in accordance with Claim 8 or 9, designed as an unmanned aircraft.

## Revendications

1. Procédé de commande d'un mouvement de vol d'un aéronef pour l'atterrissage de l'aéronef, comportant
- l'acquisition de premières données d'image au moyen d'un premier dispositif de caméra (1.1), qui est disposé sur un aéronef et est configuré pour capturer une zone d'atterrissage, dans lequel les premières données d'image affichent une première séquence de premières images de caméra ;
- l'acquisition de deuxièmes données d'image au moyen d'un deuxième dispositif de caméra (1.2), qui est disposé sur l'aéronef et qui est configuré pour capturer la zone d'atterrissage, dans lequel les deuxièmes données d'image affichent une deuxième séquence de deuxièmes images de caméra ;
- le traitement des première et deuxième données d'image au moyen d'un dispositif d'évaluation (2), comprenant :
- l'exécution d'une première analyse d'image basée sur un réseau neuronal pour les premières données d'image, auquel cas au moins une première zone d'atterrissage est déterminée dans la zone d'atterrissage capturée;
- l'exécution d'une deuxième analyse d'image sans intelligence artificielle pour les deuxièmes données d'image, auquel cas au moins une deuxième zone d'atterrissage est déterminée dans la zone d'atterrissage capturée ;
- la détermination des coordonnées de position d'une zone d'atterrissage libre, qui est incluse dans la première et deuxième zone d'atterrissage si une comparaison montre que les première et deuxième zones d'atterrissage se superposent dans la zone d'atterrissage au moins dans la zone d'atterrissage libre ;
- la réception de coordonnées de position pour un site d'atterrissage cible provenant d'un dispositif de commande (3) de l'aéronef ;
- la détermination des caractéristiques de déclenchement lorsqu'une comparaison des coordonnées de position pour la zone d'atterrissage dégagée et des coordonnées de position pour le site d'atterrissage cible montre une correspondance ; et
- la transmission des caractéristiques de déclenchement, qui indiquent la disponibilité du site d'atterrissage cible pour un atterrissage, au dispositif de commande (3) de l'aéronef ; et
- la commande d'un mouvement de vol de l'aéronef pour atterrir sur le site d'atterrissage cible via le dispositif de commande (3) ;
dans lequel le premier dispositif de caméra (1.1) est un appareil photographique et comprend la réalisation de la première analyse d'image, au moyen d'un flux optique pour déterminer des mouvements dans les premières données d'image afin de déterminer un obstacle au sol ;
dans lequel le deuxième dispositif de caméra (1.2) est une caméra à imagerie thermique et comprend la réalisation de la deuxième analyse d'image, pour déterminer la chaleur dans les deuxièmes données d'image au moyen d'un filtre à seuil et
dans lequel une zone d'atterrissage est déterminée comme étant impropre à l'atterrissage si lors de la première et/ou la deuxième analyse d'image il est déterminé qu'un obstacle au sol est disposé dans la zone d'atterrissage.

2. Procédé de commande d'un mouvement de vol d'un aéronef pour le largage d'un chargement par l'aéronef, comportant
- l'acquisition de premières données d'image au moyen d'un premier dispositif de caméra (1.1), qui est disposé sur un aéronef et est configuré pour capturer une zone d'atterrissage, dans lequel les premières données d'image affichent une première séquence de premières images de caméra ;
- l'acquisition de deuxièmes données d'image au moyen d'un deuxième dispositif de caméra (1.2), qui est disposé sur l'aéronef et qui est configuré pour capturer la zone d'atterrissage, dans lequel les deuxièmes données d'image affichent une deuxième séquence de deuxièmes images de caméra ;
- le traitement des première et deuxième données d'image au moyen d'un dispositif d'évaluation (2), comprenant :
- l'exécution d'une première analyse d'image basée sur un réseau neuronal pour les premières données d'image, auquel cas au moins une première zone de largage pour le largage d'un chargement de l'aéronef dans la zone d'atterrissage détectée est déterminée ;
- l'exécution d'une deuxième analyse d'image sans intelligence artificielle pour les deuxièmes données d'image, auquel cas au moins une deuxième zone de largage pour le largage d'un chargement de l'aéronef dans la zone d'atterrissage détectée est déterminée ;
- la détermination des coordonnées de position d'une zone de largage libre, qui est incluse dans la première et deuxième zone de largage, si une comparaison montre que la première et la deuxième zones de largage se superposent dans la zone d'atterrissage au moins dans la zone de largage libre ;
- la réception des coordonnées de position d'un site de largage cible provenant d'un dispositif de commande (3) de l'aéronef ;
- la détermination des caractéristiques de déclenchement lorsqu'une comparaison des coordonnées de position pour la zone de largage libre et des coordonnées de position pour le site de largage cible aboutit à une correspondance ; et
- la transmission des caractéristiques de déclenchement, qui indiquent la disponibilité du site de largage cible pour le largage du chargement au dispositif de commande (3) de l'aéronef ; et
- la commande d'un mouvement de vol de l'aéronef pour le largage du chargement sur le site de largage cible par le dispositif de commande (3);
dans lequel le premier dispositif de caméra (1.1) est un appareil photographique et comprend la réalisation de la première analyse d'image, au moyen d'un flux optique pour déterminer des mouvements dans les premières données d'image afin de déterminer un obstacle au sol ;
dans lequel le deuxième dispositif de caméra (1.2) est une caméra à imagerie thermique et comprend la réalisation de la deuxième analyse d'image, pour déterminer la chaleur dans les deuxièmes données d'image au moyen d'un filtre à seuil et
dans lequel une zone d'atterrissage est déterminée comme étant impropre au largage du chargement si lors de la première et/ou la deuxième analyse d'image il est déterminé qu'un obstacle au sol est disposé dans la zone d'atterrissage.

3. Procédé selon la revendication 1 ou 2, **caractérisé en ce que** l'exécution de la première analyse d'image et/ou de la deuxième analyse d'image comprend en outre les éléments suivants :
- la fourniture des caractéristiques d'obstacle indiquant au moins une catégorie d'obstacles au sol ;
- la détermination d'une zone d'atterrissage qui est impropre à l'atterrissage ou au largage de la charge si lors de la première et/ou la deuxième analyse d'image il est déterminé en utilisant des caractéristiques d'obstacle qu'un obstacle au sol est disposé dans la zone d'atterrissage/largage, qui peut être attribué à ladite au moins une catégorie d'obstacles au sol ; et
- la poursuite du traitement des premières et deuxièmes données d'image au moyen de la première et de la deuxième analyse d'image jusqu'à ce que la zone d'atterrissage/largage libre soit déterminée.

4. Procédé selon la revendication 3, **caractérisé en ce que** des caractéristiques d'obstacles sont fournies, qui indiquent une ou plusieurs des catégories suivantes d'obstacles au sol : obstacle au sol mobile, obstacle au sol stationnaire, obstacle humain, végétal et animal.

5. Procédé selon au moins une des revendications précédentes, **caractérisé en ce qu'**il est en outre prévu de : effectuer une analyse visuelle pour le premier/deuxième dispositif de caméra, auquel cas il est déterminé si un champ de vision de détection respectif du premier/deuxième dispositif de caméra est exempt d'un blocage de champ de vision.

6. Procédé selon la revendication 5, **caractérisé en ce que** lors de l'analyse visuelle il est déterminé dans quelle mesure le champ de vision de détection du premier dispositif de caméra et/ou du deuxième dispositif de caméra est bloqué, et des caractéristiques de champ de vision sont fournies dans le dispositif d'évaluation (2) et transmises au dispositif de commande (3), qui indiquent l'étendue du blocage du champ de vision de détection.

7. Procédé selon la revendication 6, **caractérisé en ce que** le dispositif de commande (3) vérifie les caractéristiques de champ de vision et commande le mouvement de vol de l'aéronef en conséquence des signaux de commande d'atterrissage d'urgence si les caractéristiques du champ de vision indiquent une étendue de blocage du champ de vision de détection du premier dispositif de caméra et/ou du deuxième dispositif de caméra, qui dépasse une valeur seuil, dans lequel les signaux de commande d'atterrissage d'urgence sont conçus pour provoquer un atterrissage d'urgence de l'aéronef.

8. Aéronef, comportant
- un dispositif de capteur (1), qui comporte un premier et un deuxième dispositif de caméra ;
- un dispositif d'évaluation (2), qui comporte un ou plusieurs processeurs ; et
- un dispositif de commande (3), qui est configuré pour commander le fonctionnement de l'aéronef ;
dans lequel l'aéronef est configuré pour effectuer un atterrissage comme suit :
- l'acquisition de premières données d'image au moyen d'un premier dispositif de caméra, qui est disposé sur un aéronef et est configuré pour capturer une zone d'atterrissage, dans lequel les premières données d'image affichent une première séquence de premières images de caméra ;
- l'acquisition de deuxièmes données d'image au moyen d'un deuxième dispositif de caméra, qui est disposé sur l'aéronef et qui est configuré pour capturer la zone d'atterrissage, dans lequel les deuxièmes données d'image affichent une deuxième séquence de deuxièmes images de caméra ;
- le traitement des première et deuxième données d'image au moyen d'un dispositif d'évaluation (2), comprenant :
- l'exécution d'une première analyse d'image basée sur un réseau neuronal pour les premières données d'image, auquel cas au moins une première zone d'atterrissage est déterminée dans la zone d'atterrissage capturée;
- l'exécution d'une deuxième analyse d'image sans intelligence artificielle pour les deuxièmes données d'image, auquel cas au moins une deuxième zone d'atterrissage est déterminée dans la zone d'atterrissage capturée ;
- la détermination des coordonnées de position d'une zone d'atterrissage libre, qui est incluse dans la première et deuxième zone d'atterrissage si une comparaison montre que les première et deuxième zones d'atterrissage se superposent dans la zone d'atterrissage au moins dans la zone d'atterrissage libre ;
- la réception de coordonnées de position pour un site d'atterrissage cible provenant d'un dispositif de commande (3) de l'aéronef ;
- la détermination des caractéristiques de déclenchement lorsqu'une comparaison des coordonnées de position pour la zone d'atterrissage dégagée et des coordonnées de position pour le site d'atterrissage cible montre une correspondance ; et
- la transmission des caractéristiques de déclenchement, qui indiquent la disponibilité du site d'atterrissage cible pour un atterrissage, au dispositif de commande (3) de l'aéronef ; et
- la commande d'un mouvement de vol de l'aéronef pour atterrir sur le site d'atterrissage cible via le dispositif de commande (3) ;
dans lequel le premier dispositif de caméra (1.1) est un appareil photographique et comprend la réalisation de la première analyse d'image, au moyen d'un flux optique pour déterminer des mouvements dans les premières données d'image afin de déterminer un obstacle au sol ;
dans lequel le deuxième dispositif de caméra (1.2) est une caméra à imagerie thermique et comprend la réalisation de la deuxième analyse d'image, pour déterminer la chaleur dans les deuxièmes données d'image au moyen d'un filtre à seuil et
dans lequel une zone d'atterrissage est déterminée comme étant impropre à l'atterrissage si lors de la première et/ou la deuxième analyse d'image il est déterminé qu'un obstacle au sol est disposé dans la zone d'atterrissage.

9. Aéronef, comportant
- un dispositif de capteur (1), qui comporte un premier et un deuxième dispositif de caméra ;
- un dispositif d'évaluation (2), qui comporte un ou plusieurs processeurs ; et
- un dispositif de commande (3), qui est configuré pour commander le fonctionnement de l'aéronef ;
dans lequel l'aéronef est configuré pour effectuer un largage d'un chargement par l'aéronef comme suit :
- l'acquisition de premières données d'image au moyen d'un premier dispositif de caméra, qui est disposé sur un aéronef et est configuré pour capturer une zone d'atterrissage, dans lequel les premières données d'image affichent une première séquence de premières images de caméra ;
- l'acquisition de deuxièmes données d'image au moyen d'un deuxième dispositif de caméra, qui est disposé sur l'aéronef et qui est configuré pour capturer la zone d'atterrissage, dans lequel les deuxièmes données d'image affichent une deuxième séquence de deuxièmes images de caméra ;
- le traitement des première et deuxième données d'image au moyen d'un dispositif d'évaluation (2), comprenant :
- l'exécution d'une première analyse d'image basée sur un réseau neuronal pour les premières données d'image, auquel cas au moins une première zone de largage pour le largage d'un chargement de l'aéronef dans la zone d'atterrissage détectée est déterminée ;
- l'exécution d'une deuxième analyse d'image sans intelligence artificielle pour les deuxièmes données d'image, auquel cas au moins une deuxième zone de largage pour le largage d'un chargement de l'aéronef dans la zone d'atterrissage détectée est déterminée ;
- la détermination des coordonnées de position d'une zone de largage libre, qui est incluse dans la première et deuxième zone de largage, si une comparaison montre que la première et la deuxième zones de largage se superposent dans la zone d'atterrissage au moins dans la zone de largage libre ;
- la réception des coordonnées de position d'un site de largage cible provenant d'un dispositif de commande (3) de l'aéronef ;
- la détermination des caractéristiques de déclenchement lorsqu'une comparaison des coordonnées de position pour la zone de largage libre et des coordonnées de position pour le site de largage cible aboutit à une correspondance ; et
- la transmission des caractéristiques de déclenchement, qui indiquent la disponibilité du site de largage cible pour le largage du chargement au dispositif de commande (3) de l'aéronef ; et
- la commande d'un mouvement de vol de l'aéronef pour le largage du chargement sur le site de largage cible par le dispositif de commande (3);
dans lequel le premier dispositif de caméra (1.1) est un appareil photographique et comprend la réalisation de la première analyse d'image, au moyen d'un flux optique pour déterminer des mouvements dans les premières données d'image afin de déterminer un obstacle au sol ;
dans lequel le deuxième dispositif de caméra (1.2) est une caméra à imagerie thermique et comprend la réalisation de la deuxième analyse d'image, pour déterminer la chaleur dans les deuxièmes données d'image au moyen d'un filtre à seuil et
dans lequel une zone d'atterrissage est déterminée comme étant impropre au largage du chargement si lors de la première et/ou la deuxième analyse d'image il est déterminé qu'un obstacle au sol est disposé dans la zone d'atterrissage.

10. Aéronef selon la revendication 8 ou 9, conçu comme un aéronef sans pilote.
